# EUROPÄISCHE PATENTSCHRIFT

(11) **EP 1 761 445 B1**
(45) Veröffentlichungstag und Bekanntmachung des Hinweises auf die Patenterteilung: **02.01.2008**
(21) Anmeldenummer: 05772509.5
(22) Anmeldetag: 29.06.2005
(51) Int. Cl.: B65G 37/00

(54) **FÖRDEREINRICHTUNG ZUM FÖRDERN VON FÖRDERGUT AUF PALETTEN LÄNGS EINER HORIZONTALEN FÖRDERSTRECKE**
CONVEYING DEVICE FOR CONVEYING GOODS ON PALLETS ALONG A HORIZONTAL CONVEYING LINE
DISPOSITIF CONVOYEUR POUR LE TRANSPORT DE MARCHANDISES SUR DES PALETTES LE LONG D'UNE VOIE DE TRANSPORT HORIZONTALE

(30) Priorität: 01.07.2004 DE 102004032066
(43) Veröffentlichungstag der Anmeldung: 14.03.2007
(73) Patentinhaber: KNAPP LOGISTIK AUTOMATION GMBH., 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2005/006976
(87) Internationale Veröffentlichungsnummer: WO 2006/002879

(56) Entgegenhaltungen:
- US-A- 3 746 144
- US-A- 4 561 535
- US-A- 5 568 857
- US-B1- 6 409 011

## Beschreibung

Fördereinrichtung zum Fördern von vorzugsweise schwerem Fördergut auf Paletten oder dergleichen längs einer im wesentlichen horizontalen Förderstrecke

Die Erfindung betrifft eine Fördereinrichtung zum Fördern von vorzugsweise schwerem Fördergut auf Paletten oder dergleichen längs einer im wesentlichen horizontalen Förderstrecke auf dem Boden eines Raumes oder im Freien.

Soweit vorstehend und im folgenden von "Paletten" die Rede ist, so soll dies nicht einschränkend verstanden werden; vielmehr umfaßt die vorliegende Erfindung auch solche Systeme, in denen andere Transporteinheiten wie zum Beispiel Gitterboxen verwendet werden, um Fördergut, insbesondere Stückgut, darin oder darauf zu transportieren. Ist das Fördergut ein größeres Stückgut mit vergleichsweise großer Standfläche, so kann auf "Paletten" oder dergleichen ganz verzichtet werden.

Gattungsgemäße Palettenförderstrecken sind - im Gegensatz zu normalen Bandförderern oder Rollenförderern (siehe z.B. das Dokument US-A-5 568 857) welche eher für kleines leichtgewichtiges Fördergut ausgelegt sind - vergleichsweise klobig, großdimensioniert und sehr stabil gebaut, um schwere Auflasten innerhalb eines Transportsystems beispielsweise in einer Kommissionieranlage zuverlässig auf Paletten - wie der Name schon sagt - aufnehmen und transportieren zu können. Paletten einschließlich darauf befindliches Fördergut können einen Quader in einer Größe ausbilden, der eine Grundfläche von 1,2m Länge x 0,8m Breite besitzt, und eine Höhe von 1,4m einnimmt. Eine andere Ausführung sieht bei gleichbleibender Länge und Höhe sogar eine doppelte Breite von 1,2m vor. Ein Palette plus Auflast kann maximal 1250 kg wiegen. Entsprechend stabil muß das Palettenfördersystem gebaut sein. Es versteht sich, daß Palettenfördersysteme aus statischen Gründen kaum in einer Hochlage in einem Lager, eher auf dem Boden eines Lagerraums oder im Freien verlegt sind, und vielfach vom Einlagerort bis zum Auslagerort des Förderguts große Strecken zurückgelegt werden müssen. Aufgrund der bodennahen Verlegung der Palettenförderstrecke kann der Lagerraum für andere logistische Überlegungen, beispielsweise Bewegungen von Transportgut, Maschinen und/oder Personen, in einem Lager oder im Freien nur parallel zur Förderstrecke genützt werden.

Aufgabe der Erfindung ist die Schaffung einer Förderstrecke der eingangs genannten Art, welche mit einfachen Mitteln zusätzliche logistische Möglichkeiten einer Nutzung des Lagers in einer Lagerhalle oder im Freien bietet, und gleichwohl schweres Fördergut bis zu 1250 kg gefördert werden kann.

Gelöst wird die der Erfindung zugrundeliegende Aufgabe durch die im unabhängigen Anspruch 1 angegebenen Mittel, vorteilhaft weitergebildet durch die Maßnahmen nach den abhängigen Ansprüchen 2 bis 21.

Wesen der Erfindung ist, daß die Förderstrecke in eine erste Förderstrecke und in eine zweite Förderstrecke in Längsrichtung unterteilt ist und der Teilungsbereich durch zumindest ein gleichgeartetes Klappstück gebildet ist, welches aus der Ebene der Förderstrecke nach oben hochklappbar ist. Die auf dem Boden eines Raumes oder im Freien verlegte Förderstrecke ist ein Doppelgurtförderer mit zwei seitlichen in Längsrichtung der Förderstrecke verlaufenden Umlauftrieben, auf welchen sich oberseitig die Paletten abstützen. Wesensmerkmal der Erfindung insbesondere ist; daß das Klappstück als Zugbrücke mit zwei seitlichen flexiblen aufwickelbaren Zugmitteln ausgebildet ist und durch Aufwikkeln der Zugmittel aus einer Bodenlage in eine Hochlage nach oben geschwenkt und durch Arretiermittel arrettiert werden kann. Dadurch kann, sofern ein Bedarf besteht, mit einfachen Mitteln, schnell und vorzugsweise mechanisch oder vollautomatisch, ein Teilstück der Palettenfördertechnik "vorübergehend entfernt" werden, um die darunter liegende Bodenfläche vollständig in einer Weise freizugeben, daß beispielsweise ein hoher Gabelstapler mit anderem geladenen Transportgut die Förderstrecke ohne Behinderung auf gleichem Niveau queren kann. Kein Kabelkanal, keine Längsschwelle, etc. behindern mehr die Durchfahrt des Gabelstaplers in Querrichtung der Förderstrecke. Es versteht sich, daß sich dadurch mit einfachen Maßnahmen wesentlich komplexere und verbesserte, wenn nicht sogar optimierte, Transport- und Wegesysteme in einem Lager realisieren lassen, als dies beim Stand der Technik der herkömmlichen Palettenfördertechnik der Fall ist. Ein Teilstück der Palettenfördertechnik wird also nach oben geklappt. Dadurch wird ein Durchgang frei, der je nach Ausführung zwischen 1m und 3m breit sein kann. Das Teil- oder Klappstück wird bevorzugt von der angrenzenden Fördertechnik mitangetrieben. Die Schwenkbewegung wird von einem oder mehreren Antrieben (Elektro- oder Hydraulikmotor) vorzugsweise mit Haltebremse angetrieben. Als Zugmittel für das Hochziehen des Klappstücks kommen insbesondere Flachriemen mit eingelassenen Stahlzugträgern zum Einsatz. Gegebenenfalls können zwei aneinander grenzende Klappstücke gleichzeitig von zwei Seiten hochgezogen werden, um eine Mittelöffnung mit breitem Durchgang freizugeben. Es können aber auch zwei aneinandergrenzende Klappstücke selbst aneinander gelenkt sein, um nur von einer Seite die beiden Klappstücke gleichzeitig hochzuziehen und aneinander zu klappen. Auch bei dieser Variante wird eine breiter Durchgang geschaffen, der knapp der doppelten Länge der beiden Klappstücke entspricht.

Eine erfindungsgemäße Palettenförderstrecke kann, obgleich ein bewegliches Teilstück integriert ist, ohne Beeinträchtigung der Förderleistung und/oder des maximalen Palettengewichts/Fördergut von maximal 1250 kg betrieben werden. Es können bei der Erfindung Paletten einschließlich darauf befindlichem Fördergut in einer Vorzugsreihe in einer Größe mit einer Grundfläche von 1,2m Länge x 0,8m Breite und einer Höhe von 1,4m problemlos verwendet werden, in einer anderen Vorzugsreihe sogar bei gleichbleibender Länge und Höhe mit einer doppelten Breite von 1,2m. Querverkehr, gegebenenfalls komplett unabhängig vom Längsverkehr und Zweck der Palettenförderstrecke, kann niveaugleich betrieben werden (und nicht holpernd in höherem Niveau über die seitlichen Längsschienen gegebenenfalls mit eingangs- und ausgangsseitigen schrägen Bodenrampen und niveau-ausgleichenden Mittelstücken, etc. zwischen den Längsschienen). Die Erfindung ähnelt ...verlegten Eisenbahnschienen bei einem Bahnübergang, bei welchem zum Zwecke des Querens des Kraftfahrzeugverkehrs auf einer Straße die Eisenbahnschienen im Bereich des Bahnübergangs hochgeklappt werden, um einen holperfreien Querverkehr zu ermöglichen (was natürlich aus statischen Gründen unzweckmäßig ist). Gleichwohl hat sich bei Palettenförderern entgegen der Fachwelt gezeigt, daß das Hochklappen selbst schwerer erfindungsgemäßer Klappstücke doch vorteilhaft ist.

Die erfindungsgemäßen Klappstücke sind nur deshalb vorteilhaft, weil sie in Verbindung mit aufwickelbaren flexiblen Zugmittel betrieben werden - nicht mit Druckstangen oder dergleichen. Die schlanken leichtgewichtigen Zugmittel sind in der Lage, das schwere Klappstück hochzuheben, welches in Doppelgurtfördertechnik gebaut ist, wie der Rest der Förderstrecke auch - nicht in Rollenfördertechnik oder Bandfördertechnik, da diese Techniken nicht für schwere Lasten geeignet sind.

Weitere vorteilhafte Ausgestaltungen ergeben sich aus den Ansprüchen.

Die Erfindung wird nachfolgend anhand von Ausführungsbeispielen unter Bezugnahme auf die beigefügten Zeichnungen näher erläutert; es zeigen:
- Figuren 1 bis 3: eine erfindungsgemäße Palettenförderstrecke in schematischer perspektivischer Teilansicht mit einem Klappstück in einer Bodenlage, in einer Mittellage und in einer Hochlage zwecks Schaffung eines Querdurchgangs, und
- Figuren 4 und 5: Palettenförderstrecken in weiteren Aüsführungsformen.

Nach den Zeichnungen umfaßt eine Fördereinrichtung 1 eine geradlinige horizontale Förderstrecke zum Fördern von schwerem Fördergut auf (nicht veranschaulichten) Paletten längs der Förderstrecke auf dem Boden 4 eines Raumes oder im Freien.

Die Förderstrecke weist zwei seitliche Umlauftriebe 8' in Längsrichtung auf, welche oberseitig eine plane, wenn auch mit Durchgängen versehene Abstützungsebene für die Paletten bilden.

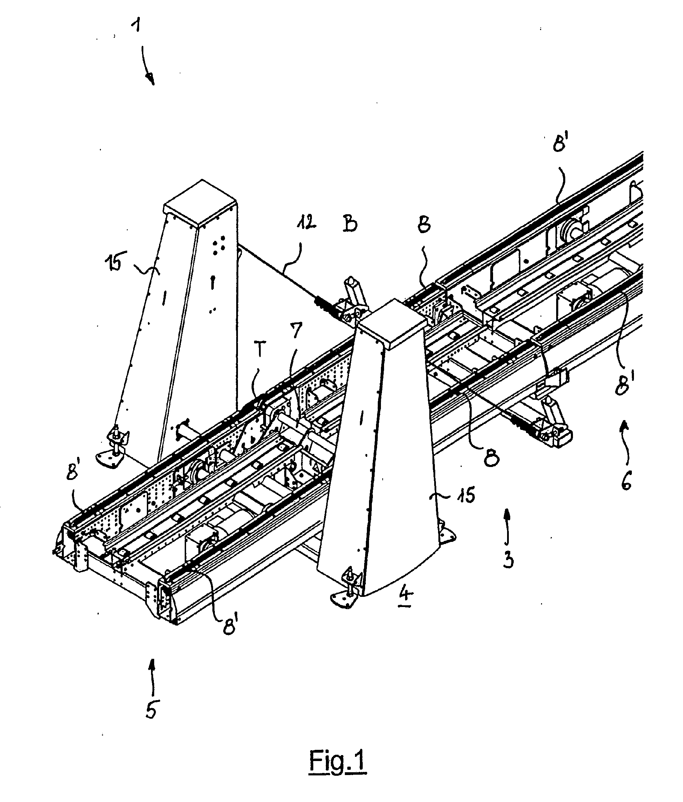

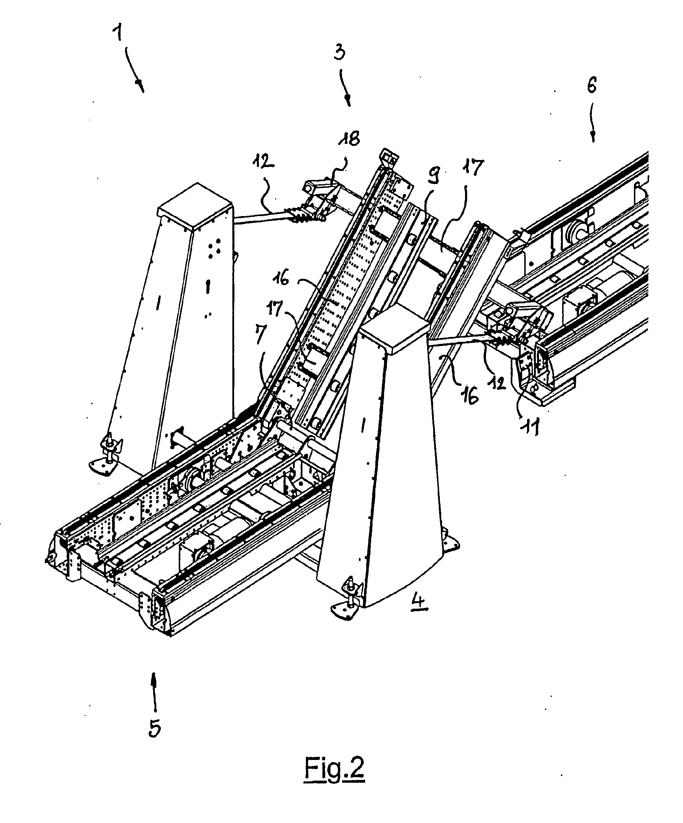

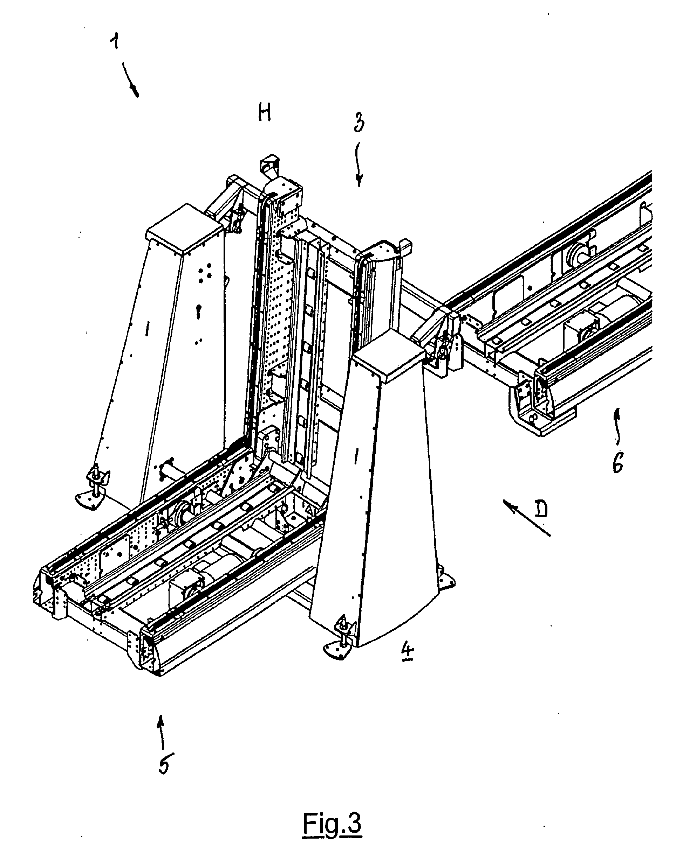

Insbesondere ist die Förderstrecke in eine erste Förderstrecke 5 und in eine zweite Förderstrecke 6 in Längsrichtung unterteilt. Der Teilungsbereich ist gemäß den Figuren 1 bis 3 durch ein gleichgeartetes Klappstück 3 gebildet, welches an die erste Förderstrecke 5 mit horizontaler querverlaufender Schwenkachse 7 angelenkt und aus einer Bodenlage B gemäß Figur 1 in eine Hochlage H gemäß Figur 3 nach oben schwenkbar und arrettierbar ist. Die Hochlage entspricht einem schrägen Klappstück 3, welches nahezu die Vertikallage einnehmen kann. Das Klappstück 3 ist in Form einer Zugbrücke ausgebildet und besitzt zwei seitliche flexible aufwickelbare Zugmittel 12, wie nachfolgend noch beschrieben wird.

Das Klappstück 3 weist, wie die erste und die zweite Förderstrecke 5, 6 auch, zwei seitliche Umlauftriebe 8, vorzugsweise Ketten- oder Zahnriementriebe, auf. Auch besitzt das Klappstück 3, wie die erste und die zweite Förderstrekke 5, 6 auch, in Längsrichtung eine mittige Abstützung 9 in Form von freilaufenden voneinander beabstandeten Rollen.

Die zwei seitlichen Umlauftriebe 8 sind von der angrenzenden ersten Förderstrecke 5 mitangetrieben, an der das Klappstück 3 mit horizontaler Schwenkachse 7 angelenkt ist.

Insbesondere ist die angetriebene Umlenkachse der seitlichen Umlauftriebe 8' der ersten Förderstrecke 5 gleichzeitig die drehfest verbundene mitangetriebene Umlenkachse der seitlichen Umlauftriebe 8 des Klappstücks 3, wobei diese gemeinsame Umlenkachse auch die horizontale Schwenkachse 7 darstellt, um welche das Klappstück hochgeschwenkt werden kann.

Gegebenenfalls können die Umlenkachse der seitlichen Umlauftriebe 8 des Klappstücks 3 und die Umlenkachse der seitlichen Umlauftriebe 8' der ersten Förderstrecke 5 auch voneinander geringfügig beabstandet und durch eine Transmission T, vorzugsweise in Form eines Umlauf-Zahnriemens, antreibend miteinander verbunden sein.

Das freie nicht angelenkte Längsende des Klappstücks 3 sowie das zugewandte Längsende der zweiten Förderstrecke 6, an welcher das Klappstück nicht angelenkt ist, besitzen Zentrierungs- und/oder Fixierungsmittel 11 für eine exakte Ausrichtung und Sicherung des Klappstücks 3 in der nicht hochgeschwenkten Bodenlage B.

Gemäß den Figuren 1 bis 3 sind in Pylonen 15 zwei seitliche synchron gesteuerte (nicht veranschaulichte) Antriebe mit einer Haltebremse für ein Hochschwenken des Klappstücks 3 vorgesehen. Die Antriebe bzw. die Pylonen 15 sind im Raum/im Freien bodenseitig abgestützt, können aber auch deckenseitig im Raum oder an einem benachbarten Gerüst/Regal im wesentlichen oberhalb des Klappstücks 3 hängend befestigt sein.

Die Antriebe für ein Hochschwenken des Klappstücks 3 in die Hochlage H und für ein Festhalten des Klappstücks 3 in der Hochlage sind im Ausführungsbeispiel nach den Figuren 1 bis 3 jeweils Elektroantriebe. Die Antriebe befinden sich an oder in den vorgenannten seitlichen Pylonen 15, welche sich außerhalb des Palettendurchlaufs der Förderstrecke im Bereich des Endes der ersten Förderstrecke 5 auf dem Boden 4 höhenverstellbar abstützen und in Form von konisch verjüngten Türmen etwa eine Palettenlänge vertikal nach oben ragen. Die Elektroantriebe besitzen jeweils eine nicht veranschaulichte Winde zum Aufwickeln eines flexiblen Zugmittels 12 in Form eines Plachriemens mit eingelassenen Stahlzugträgern, wobei das freie Ende des flexiblen Zugmittels am Klappstück 3 befestigt ist.

Die Elektroantriebe befinden sich demnach an oder in den seitlichen Pylonen 15 im Bereich der horizontalen Schwenkachse 7 außerhalb des Palettendurchlaufbereichs mit stabiler satter Bodenabstützung und/oder Bodenbefestigung.

Die seitlichen Umlauftriebe 8 sind an oder in seitlichen gleich ausgebildeten Längsträgern 16 des Klappstücks 3 angeordnet, welche mit Querträgern 17 fest miteinander verbunden sind. Ein Querträger 17, gelegen vorzugsweise zwischen der Längsmitte des Klappstücks 3 und dem freien nicht angelenkten Längsende des Klappstücks, besitzt hierbei Verankerungsstellen 18 für eine Befestigung des freien Endes der flexiblen Zugmittel 12.

Die erste und die zweite Förderstrecke 5, 6 besitzen im Bereich des Klappstücks 3 eine (nicht veranschaulichte) Palettendurchlauf-Stoppeinrichtung, welche während eines Hochschwenkens und bei einem hochgeschwenkten Klappstück 3 aktiviert ist.

Ferner ist ein (nicht veranschaulichter) Betätigungsschalter, vorzugsweise ein Zeitschalter, für ein Schwenken des Klappstücks 3 und gegebenenfalls für ein Anhalten der Förderung der Fördereinrichtung 1 und/oder für ein Aktivieren einer Palettendurchlauf-Stoppeinrichtung im Bereich des Klappstücks 3 vorgesehen. Der Betätigungsschalter kann über eine drahtlose Fernbedienung beispielsweise von einem Fahrer eines Gabelstaplers angesteuert werden, wenn er die Förderstrecke queren und den Durchgang D durch Hochschwenken des Klappstücks 3 freilegen will.

Auch ist eine (nicht veranschaulichte) optische Personen-Sicherheitseinrichtung im Bereich des Klappstücks 3 in Form eines Bewegungsmelders vorgesehen, welcher eine Notausschaltung eines Schwenkbetriebs des Klappstücks 3 ermöglicht, sofern eine Person in einen Gefahrenbereich in die Nähe des Klappstücks 3 kommt.

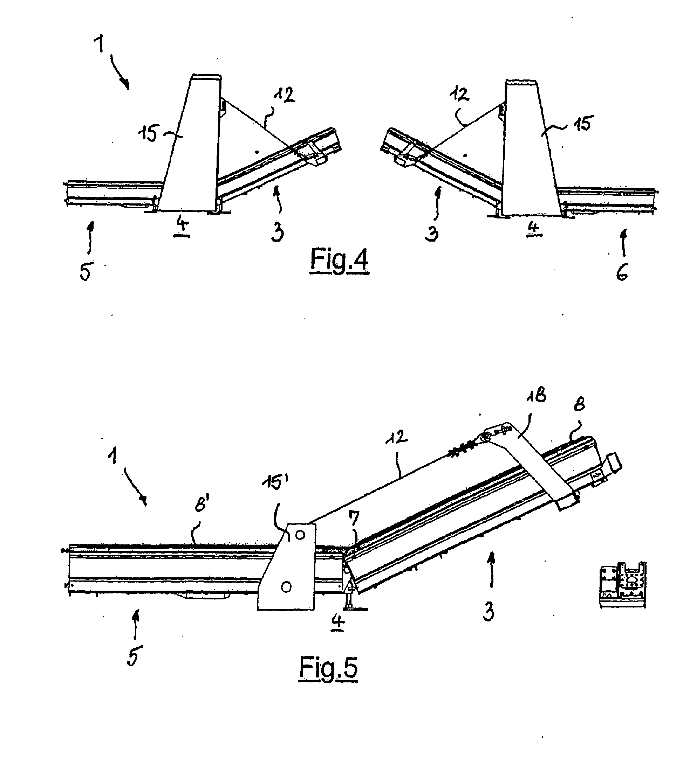

In Figur 4 ist eine weitere Fördereinrichtung 1 zum Fördern von schwerem Fördergut auf Paletten in Form einer symmetrisch aufgebauten Einrichtung dargestellt, welche im wesentlichen der doppelten spiegelbildlichen Ausführung der Variante nach den Figuren 1 bis 3 entspricht, um einen etwa doppelt so breiten Durchgang D für eine Querung eines Dritten freizugeben. Im besonderen sind sowohl an die erste als auch die zweite Förderstrecke 5, 6 jeweils ein gleich aufgebautes Klappstück 3 angelenkt. Beide Klappstücke werden bei Bedarf zeitgleich und synchron betrieben.

In einer weiteren Ausführungsvariante kann bei einer Fördereinrichtung 1 vorgesehen sein, an das freie Längsende des angelenkten Klappstücks 3 nach den Figuren 1 bis 3 ein weiteres gleichgeartetes Klappstück anzulenken. Dann sind beide Klappstücke 3 an die erste Förderstrecke 5 angelenkt und werden auch von den gleichen Antrieben der Figuren 1 bis 3 in den Pylonen 15 der ersten (linken) Förderstrecke 5 betrieben. Das dann rechte freie Längsende des zweiten Klappstücks verbleibt immer auf dem Boden 4 und ist dort durch Rollen abgestützt.

Gemäß Figur 5 ist eine Fördereinrichtung 1, welche grundsätzlich wie die Ausführungsvariante nach den Figuren 1 bis 3 ausgebildet ist, mit in der Höhe kurzen Pylonen 15' ausgestaltet, welche nur geringfügig über die Höhe des Stranges der seitlichen Umlauftriebe 8, 8' aufwärts ragt. Die flexiblen Zugmittel 12 verlaufen hierbei im wesentlichen parallel zum Klappstück 3. Entsprechend hoch liegen die Verankerungsstellen 18 auf der Querschiene, welche die freien (rechten) Enden der Zugmittel 12 befestigt. Die in den Pylonen 15' angeordneten Elektroantriebe sind mit Übersetzungsgetrieben ausgestattet.

Ersichtlich ist also die auf dem Boden 4 eines Raumes oder im Freien verlegte Förderstrecke in eine erste Förderstrekke 5 und in eine zweite Förderstrecke 6 unterteilt und besitzt ein zwischengeordnetes Klappstück nach Art der Förderstrecke, wobei die Förderstrecke ein Doppelgurtförderer mit zwei seitlichen in Längsrichtung der Förderstrecke verlaufenden Umlauftrieben 8' ist, auf welchen sich oberseitig die Paletten abstützen, das gleichgeartete Klappstück 3 als Zugbrücke mit zwei seitlichen flexiblen aufwickelbaren Zugmitteln 12 ausgebildet und an die erste oder zweite Förderstrecke 5, 6 mit horizontaler querverlaufender Schwenkachse 7 angelenkt ist und durch Aufwickeln der Zugmittel aus einer Bodenlage in eine Hochlage nach oben schwenkbar und durch Arretiermittel arrettierbar ist. Die freien Enden der Zugmittel 12 sind am nicht angelenkten Ende des Klappstücks 3 befestigt, und es sind die durch Antriebe aufwickelbaren Enden der Zugmittel an bzw. in zwei seitlichen bodenseitig abgestützten, bezüglich der Förderstrecke nach oben ragenden Pylonen 15, 15' oberseitig befestigt oder umgelenkt.

## Patentansprüche

1. Fördereinrichtung (1) zum Fördern von vorzugsweise schwerem Fördergut auf Paletten oder dergleichen längs einer im wesentlichen horizontalen Förderstrecke auf dem Boden (4) eines Raumes oder im Freien, wobei
die auf dem Boden (4) eines Raumes oder im Freien verlegte Förderstrecke in eine erste Förderstrecke (5) und in eine zweite Förderstrecke (6) unterteilt ist und ein zwischengeordnetes Klappstück (3) nack Art der Förderstrecke aufweist, **dadurch gekennzeichnet, daß** die Förderstrecke ein Doppelgurtförderer mit zwei seitlichen in Längsrichtung der Förderstrecke verlaufenden Umlauftrieben (8,8') ist, auf welchen sich oberseitig die Paletten abstützen, das gleichgeartete Klappstück (3) als Zugbrücke mit zwei seitlichen flexiblen aufwickelbaren Zugmitteln (12) ausgebildet und an die erste oder zweite Förderstrecke (5, 6) mit horizontaler querverlaufender Schwenkachse (7) angelenkt ist und durch Aufwickeln der Zugmittel (12) aus einer Bodenlage in eine Hochlage nach oben schwenkbar und durch Arretiermittel arrettierbar ist.

2. Fördereinrichtung nach Anspruch 1,
**dadurch gekennzeichnet,**
**daß** die freien Enden der Zugmittel (12) am nicht angelenkten Ende des Klappstücks (3) befestigt und die durch Antriebe aufwickelbaren Enden der Zugmittel (12) an bzw. in zwei seitlichen bodenseitig abgestützten, bezüglich der Förderstrecke nach oben ragenden Pylonen (15, 15') oberseitig befestigt oder umgelenkt sind, oder alternativ die aufwickelbaren Enden der Zugmittel (12) an einem benachbarten Gerüst/Regal oder an einer Raumdecke befestigt sind.

3. Fördereinrichtung nach Anspruch 1 oder 2,
**dadurch gekennzeichnet,**
**daß** die flexiblen Zugmittel (12) Flachriemen mit eingelassenem Stahlzugträger sind.

4. Fördereinrichtung nach einem der Ansprüche 1 bis 3,
**dadurch gekennzeichnet,**
**daß** sowohl die erste als auch die zweite Förderstrecke (5, 6) ein angelenktes Klappstück (3) aufweist.

5. Fördereinrichtung nach einem der Ansprüche 1 bis 4,
**dadurch gekennzeichnet,**
**daß** an das freie Längsende des angelenkten Klappstücks (3) ein weiteres gleichgeartetes Klappstück (3') angelenkt ist.

6. Fördereinrichtung nach einem der Ansprüche 1 bis 5,
**dadurch gekennzeichnet,**
**daß** die Hochlage nahezu die Vertikallage ist.

7. Fördereinrichtung nach einem der Ansprüche 1 bis 6,
**dadurch gekennzeichnet,**
**daß** das Klappstück (3) zwei seitliche Umlauftriebe (8, 8'), in Form von Ketten- öder Zahnriementrieben aufweist.

8. Fördereinrichtung nach einem der Ansprüche 1 bis 7,
**dadurch gekennzeichnet,**
**daß** das Klappstück (3) in Längsrichtung eine vorzugsweise mittige Abstützung (9) in Form von freilaufenden voneinander beabstandeten Rollen aufweist.

9. Fördereinrichtung nach einem der Ansprüche 1 bis 8,
**dadurch gekennzeichnet,**
**daß** die seitlichen Umlauftriebe (8) des Klappstücks von der angrenzenden ersten oder zweiten Förderstrecke (5, 6) mitangetrieben sind, an der das Klappstück (3) mit horizontaler Schwenkachse (7) angelenkt ist.

10. Fördereinrichtung nach Anspruch 9,
**dadurch gekennzeichnet,**
**daß** die angetriebene Umlenkachse der seitlichen Umlauftriebe (8') der ersten oder der zweiten Förderstrecke (5, 6), an welcher das Klappstück (3) angelenkt ist, gleichzeitig die drehfest verbundene mitangetriebene Umlenkachse der seitlichen Umlauftriebe (8) des Klappstücks (3) ist.

11. Fördereinrichtung nach Anspruch 9 oder 10,
**dadurch gekennzeichnet,**
**daß** die horizontale Schwenkachse (7) gleichzeitig die Umlenkachse der seitlichen Umlauftriebe (8) des Klappstücks (3) und die Umlenkachse der seitlichen Umlauftriebe (8') der ersten oder der zweiten Förderstrecke (5, 6) ist, an welcher das Klappstück (3) angelenkt ist.

12. Fördereinrichtung nach einem der Anspruch 9,
**dadurch gekennzeichnet,**
**daß** die Umlenkachse der seitlichen Umlauftriebe (8) des Klappstücks (3) und die Umlenkachse der seitlichen Umlauftriebe (8') der ersten oder der zweiten Förderstrecke (5, 6), an welcher das Klappstück (3) angelenkt ist, benachbart sind und über zumindest eine Transmission, vorzugsweise in Form eines Umlauf-Zahnriemens, antreibend miteinander verbunden sind.

13. Fördereinrichtung nach einem der Ansprüche 1 bis 12,
**dadurch gekennzeichnet,**
**daß** das freie nicht angelenkte Längsende des Klappstücks (3) sowie das zugewandte Längsende der zweiten oder der ersten Förderstrecke (6, 5), an welcher das Klappstück nicht angelenkt ist, Zentrierungs- und/oder Fixierungsmittel (11) für eine exakte Ausrichtung und/oder Sicherung des Klappstücks (3) in der nicht hochgeschwenkten Bodenlage aufweist.

14. Fördereinrichtung nach einem der Ansprüche 2 bis 13,
**dadurch gekennzeichnet,**
**daß** die beiden Antriebe des klappstücks (3) synchron angesteuert sind.

15. Fördereinrichtung nach einem der Ansprüche 2 bis 14,
**dadurch gekennzeichnet,**
**daß** die Antriebe des klappstücks (3) Haltebremsen aufweisen.

16. Fördereinrichtung nach einem der Ansprüche 1 bis 15,
**dadurch gekennzeichnet,**
**daß** die seitlichen Umlauftriebe (8) an oder in seitlichen gleich ausgebildeten Längsträgern (16) des Klappstücks (3) angeordnet sind, welche mit Querträgern (17, 17') fest miteinander verbunden sind, wobei an zumindest einem Querträger (17'), gelegen vorzugsweise zwischen der Längsmitte des Klappstücks (3) und dem freien nicht angelenkten Längsende des Klappstücks, Verankerungsstellen (18) für eine Befestigung des freien Endes der flexiblen Zugmittel (12) vorgesehen sind.

17. Fördereinrichtung nach einem der Ansprüche 1 bis 16,
**dadurch gekennzeichnet,**
**daß** die erste und/oder die zweite Förderstrecke (5, 6) im Bereich des Klappstücks (3) eine Palettendurchlauf-Stoppeinrichtung aufweist.

18. Fördereinrichtung nach Anspruch 17,
**dadurch gekennzeichnet,**
**daß** die Palettendurchlauf-Stoppeinrichtung während eines Hochschwenkens und/oder bei einem hochgeschwenkten Klappstück (3) aktiviert ist.

19. Fördereinrichtung nach einem der Ansprüche 1 bis 18,
**dadurch gekennzeichnet,**
**daß** ein Betätigungsschalter, vorzugsweise ein Zeitschalter, für ein Schwenken des Klappstücks (3) und gegebenenfalls für ein Anhalten der Förderung der Fördereinrichtung (1) und/oder für ein Aktivieren einer Palettendurchlauf-Stoppeinrichtung im Bereich des Klappstücks (3) vorgesehen ist.

20. Fördereinrichtung nach Anspruch 19,
**dadurch gekennzeichnet,**
**daß** der Betätigungsschalter über eine drahtlose Fernbedienung ansteuerbar ist.

21. Fördereinrichtung nach einem der Ansprüche 1 bis 20,
**dadurch gekennzeichnet,**
**daß** zumindest eine vorzugsweise optische Personen-Sicherheitseinrichtung im Bereich des Klappstücks (3), insbesondere ein Bewegungsmelder, vorgesehen ist, welche(r) eine Notausschaltung eines Schwenkbetriebs des Klappstücks (3) ermöglicht.

## Claims

1. Conveying device (1) for conveying preferably heavy goods on pallets or the like along an essentially horizontal conveying track on the floor (4) of a room or in open air, wherein the conveying track, installed on the floor (4) of a room or in open air, is divided into a first conveying track (5) and into a second conveying track (6) and has a hinged piece arranged in between in the manner of said conveying track,
**characterized in that**
said conveying track being a double belt conveyor with two lateral rotary drives (8, 8'), which extend in the longitudinal direction of the conveying track and on which the pallets are supported on the top side, said hinged piece (3) of the same type being designed as a drawbridge with two lateral, flexible pulling means (12) that can be wound up and to which said first or second conveying track (5, 6) is articulated with a horizontal, transversely extending pivot axis (7) and can be pivoted upward from a floor position into a high position by winding up said pulling means (12) and can be locked by locking means.

2. Conveying device in accordance with claim 1,
**characterized in that**
the free ends of said pulling means (12) are fastened to the non-articulated end of said hinged piece (3) and said ends of said pulling means (12) which can be wound up by drives are fastened to or deflected at two lateral pylons (15, 15') that are supported on the floor side and project upward relative to the conveying track on the top side, or, as an alternative, the ends of said pulling means (12), which said ends can be wound up, are fastened on the top side to an adjacent frame/shelf or to a room ceiling.

3. Conveying device in accordance with claim 1 or 2,
**characterized in that**
said flexible pulling means (12) are flat belts with embedded steel cables.

4. Conveying device in accordance with one of the claims 1 through 3,
**characterized in that**
both said first and said second conveying section (5, 6) has a articulated hinged piece (3).

5. Conveying device in accordance with one of the claims 1 through 4,
**characterized in that**
an additional hinged piece (3') of the same design is articulated to the free longitudinal end of said articulated hinged piece (3).

6. Conveying device in accordance with one of the claims 1 through 5,
**characterized in that**
the high position is nearly the vertical position.

7. Conveying device in accordance with one of the claims 1 through 6,
**characterized in that**
said hinged piece (3) has two lateral rotary drives (8, 8') in the form of chain or toothed belt drives.

8. Conveying device in accordance with one of the claims 1 through 7,
**characterized in that**
said hinged piece (3) has, in the longitudinal direction, a preferably middle support (9) in the form of free-running rollers arranged at spaced locations from one another.

9. Conveying device in accordance with one of the claims 1 through 8,
**characterized in that**
said lateral rotary drives (8) of said hinged piece are also driven by said adjoining first or second conveying track (5, 6), to which said hinged piece (3) with said horizontal pivot axis (7) is articulated.

10. Conveying device in accordance with claim 9,
**characterized in that**
the driven deflection axis of said lateral rotary drives (8') of said first or second conveying track (5, 6), to which said hinged piece (3) is articulated, is at the same time also the jointly driven deflection axis of said lateral rotary drives (8) of said hinged piece (3), which said deflection axis is connected in such a way that it rotates in unison.

11. Conveying device in accordance with claim 9 or 10,
**characterized in that**
said horizontal pivot axis (7) is at the same time the deflection axis of said lateral rotary drives (8) of said hinged piece (3) and the deflection axis of said lateral rotary drives (8') of said first or second conveying track (5, 6), to which said hinged piece (3) is articulated.

12. Conveying device in accordance with one of the claim 9,
**characterized in that**
the deflection axis of said lateral rotary drives (8) of said hinged piece (3) and the deflection axis of said lateral rotary drive (8') of said first or second conveying track (5, 6), to which said hinged piece (3) is articulated, are adjacent and are connected to one another in a driving manner via by means of at least one transmission, preferably in the form of a circulating toothed belt.

13. Conveying device in accordance with one of the claims 1 through 12,
**characterized in that**
the free, non-articulated end of said hinged piece (3) as well as the longitudinal end of said second or third conveying track (6, 5), which said end faces same, and to which said conveying track said hinged piece is not articulated, have a centering and/or fixing means (11) for the exact alignment and/or securing of said hinged pieces (3) in the floor position, which is not the pivoted-up position.

14. Conveying device in accordance with one of the claims 2 through 13,
**characterized in that**
said two drives of said hinged piece (3) are activated synchronously.

15. Conveying device in accordance with one of the claims 2 through 14,
**characterized in that**
said drives of said hinged piece (3) have stop brakes.

16. Conveying device in accordance with one of the claims 1 through 15,
**characterized in that**
said lateral rotary drives (8) are arranged at or in lateral longitudinal beams (16) of identical design of said hinged piece (3), which are rigidly connected to crossbeams (17, 17'), wherein said anchoring points (18) are provided for fastening the free end of said flexible pulling means (12) on at least one said crossbeam (17'), located preferably between the longitudinal center of said hinged piece (3) and said free, non-articulated longitudinal end of said hinged piece.

17. Conveying device in accordance with one of the claims 1 through 16,
**characterized in that**
said first and/or second conveying track (5,6) has a pallet passage stop means in the area of said hinged piece (3).

18. Conveying device in accordance with claim 17,
**characterized in that**
said pallet passage stop means is activated during pivoting up and/or when the hinged piece (3) in the pivoted-up position.

19. Conveying device in accordance with one of the claims 1 through 18,
**characterized in that**
an actuating switch, preferably a timer, is provided for pivoting said hinged piece (3) and optionally for stopping the conveying of said conveying device and/or for activating a pallet passage stop means in the area of said hinged piece (3).

20. Conveying device in accordance with claim 19,
**characterized in that**
the actuating switch can be actuated by wireless remote control.

21. Conveying device in accordance with one of the claims 1 through 20,
**characterized in that**
at least one, preferably optical personal safety means, especially a motion sensor, which makes possible the emergency shut-off of a pivoting drive of said hinged piece (3), is provided in the area of said hinged piece (3).

## Revendications

1. Dispositif de convoyage (1) pour convoyer de préférence des marchandises à convoyer lourdes sur des palettes ou similaires, le long d'une trajectoire de convoyage sensiblement horizontale, sur le sol (4) d'une pièce ou à l'air libre, dans lequel la trajectoire de convoyage posée sur le sol (4) d'une pièce ou à l'air libre est subdivisée en une première trajectoire de convoyage (5) et en une seconde trajectoire de convoyage (6) et présente un tronçon rabattant (3) agencé en intermédiaire selon le type de la trajectoire de convoyage,
**caractérisé en ce que** la trajectoire de convoyage est un convoyeur à double courroie muni de deux entraînements périphériques latéraux (8, 8') s'étendant dans la direction longitudinale de la trajectoire de convoyage et sur lesquels s'appuient les palettes au niveau de la face supérieure, **en ce que** le tronçon rabattant du même type (3) est réalisé comme pont-levis comportant deux moyens de traction latéraux flexibles (12) pouvant être enroulés et est monté en articulation sur la première ou sur la seconde trajectoire de convoyage (5, 6) avec un axe de pivotement horizontal (7) qui s'étend transversalement, et peut être pivoté vers le haut par l'enroulement des moyens de traction (12) depuis une position au sol jusque dans une position relevée et peut être bloqué par des moyens de blocage.

2. Dispositif de convoyage selon la revendication 1,
**caractérisé en ce que** les extrémités libres des moyens de traction (12) sont fixées sur l'extrémité non montée en articulation du tronçon rabattant (3) et **en ce que** les extrémités des moyens de traction (12), pouvant être enroulées par les entraînements, sont fixées ou déviées au niveau de la face supérieure sur ou dans deux pylônes latéraux (15, 15') soutenus sur le côté sol et qui dépassent vers le haut par rapport à la trajectoire de convoyage, ou alternativement **en ce que** les extrémités des moyens de traction (12), pouvant être enroulées, sont fixées sur un échafaudage/rayonnage avoisinant ou sur un plafond de pièce.

3. Dispositif de convoyage selon la revendication 1 ou 2,
**caractérisé en ce que** les moyens de traction flexibles (12) sont des courroies plates avec tirant en acier encastré.

4. Dispositif de convoyage selon l'une des revendications 1 à 3,
**caractérisé en ce que** tant la première que la seconde trajectoire de convoyage (5, 6) présente un tronçon rabattant monté en articulation (3).

5. Dispositif de convoyage selon l'une des revendications 1 à 4,
**caractérisé en ce qu'**un autre tronçon rabattant du même type (3') est monté en articulation sur l'extrémité longitudinale libre du tronçon rabattant monté en articulation (3).

6. Dispositif de convoyage selon l'une des revendications 1 à 5,
**caractérisé en ce que** la position relevée est pratiquement la position verticale.

7. Dispositif de convoyage selon l'une des revendications 1 à 6,
**caractérisé en ce que** le tronçon rabattant (3) présente deux entraînements périphériques latéraux (8, 8') sous la forme d'entraînements à chaîne ou à courroie dentée.

8. Dispositif de convoyage selon l'une des revendications 1 à 7,
**caractérisé en ce que** le tronçon rabattant (3) présente dans la direction longitudinale un support (9) de préférence central sous la forme de galets agencés à distance l'un de l'autre et à roulement libre.

9. Dispositif de convoyage selon l'une des revendications 1 à 8,
**caractérisé en ce que** les entraînements périphériques latéraux (8, 8') du tronçon rabattant sont entraînés en même temps par la première ou la seconde trajectoire de convoyage adjacente (5, 6), sur laquelle le tronçon rabattant (3) est monté en articulation avec l'axe de pivotement horizontal (7).

10. Dispositif de convoyage selon la revendication 9,
**caractérisé en ce que** l'axe de déviation entraîné des entraînements périphériques latéraux (8') de la première ou de la seconde trajectoire de convoyage (5, 6) sur laquelle le tronçon rabattant (3) est monté en articulation, est simultanément l'axe de déviation, relié de manière solidaire en rotation et entraîné en même temps, des entraînements périphériques latéraux (8) du tronçon rabattant (3).

11. Dispositif de convoyage selon la revendication 9 ou 10,
**caractérisé en ce que** l'axe de pivotement horizontal (7) est simultanément l'axe de déviation des entraînements périphériques latéraux (8) du tronçon rabattant (3) et est simultanément l'axe de déviation des entraînements périphériques latéraux (8') de la première ou de la seconde trajectoire de convoyage (5, 6) sur laquelle le tronçon rabattant (3) est monté en articulation.

12. Dispositif de convoyage selon l'une des revendications 9,
**caractérisé en ce que** l'axe de déviation des entraînements périphériques latéraux (8) du tronçon rabattant (3) et l'axe de déviation des entraînements périphériques latéraux (8') de la première ou de la seconde trajectoire de convoyage (5, 6) sur laquelle le tronçon rabattant (3) est monté en articulation, sont avoisinants et sont reliés entre eux de manière propulsive par au moins une transmission, de préférence sous la forme d'une courroie dentée périphérique.

13. Dispositif de convoyage selon l'une des revendications 1 à 12,
**caractérisé en ce que** l'extrémité longitudinale libre non montée en articulation du tronçon rabattant (3) ainsi que l'extrémité longitudinale tournée vers celle-ci de la seconde ou de la première trajectoire de convoyage (6, 5) sur laquelle le tronçon rabattant (3) n'est pas monté en articulation, présentent des moyens de centrage et/ou de fixation (11) pour une orientation exacte et/ou une sécurisation exacte du tronçon rabattant (3) dans la position au sol non pivotée vers le haut.

14. Dispositif de convoyage selon l'une des revendications 2 à 13,
**caractérisé en ce que** les deux entraînements du tronçon rabattant (3) sont commandés de manière synchrone.

15. Dispositif de convoyage selon l'une des revendications 2 à 14,
**caractérisé en ce que** les entraînements du tronçon rabattant (3) présentent des freins d'arrêt.

16. Dispositif de convoyage selon l'une des revendications 1 à 15,
**caractérisé en ce que** les entraînements périphériques latéraux (8) sont agencés sur ou dans des longerons latéraux (16) du tronçon rabattant (3), lesquels sont réalisés de manière identique et lesquels sont reliés fermement l'un à l'autre par des traverses (17, 17'), sachant que des points d'ancrage (18) sont prévus sur au moins une traverse (17'), placée de préférence entre le milieu longitudinal du tronçon rabattant (3) et l'extrémité longitudinale libre non montée en articulation du tronçon rabattant, pour une fixation de l'extrémité libre des moyens de traction flexibles (12).

17. Dispositif de convoyage selon l'une des revendications 1 à 16,
**caractérisé en ce que** la première et/ou la seconde trajectoire de convoyage (5, 6) présente (présentent) un dispositif d'arrêt du passage de palettes dans la région du tronçon rabattant (3).

18. Dispositif de convoyage selon la revendication 17,
**caractérisé en ce que** le dispositif d'arrêt du passage de palettes est activé pendant un pivotement vers le haut et/ou dans le cas d'un tronçon rabattant (3) pivoté vers le haut.

19. Dispositif de convoyage selon l'une des revendications 1 à 18,
**caractérisé en ce qu'**un commutateur d'actionnement, de préférence un interrupteur à minuterie, est prévu pour un pivotement du tronçon rabattant (3) et le cas échéant pour une interruption du convoyage du dispositif de convoyage (1) et/ou pour une activation du dispositif d'arrêt du passage de palettes dans la région du tronçon rabattant (3).

20. Dispositif de convoyage selon la revendication 19,
**caractérisé en ce que** le commutateur d'actionnement peut être commandé par l'intermédiaire d'une télécommande sans fil.

21. Dispositif de convoyage selon l'une des revendications 1 à 20,
**caractérisé en ce qu'**au moins un dispositif de sécurité de préférence optique pour des personnes, en particulier un détecteur de mouvements, est prévu dans la région du tronçon rabattant (3), lequel (lesquels) permet (permettent) une déconnexion d'urgence d'une action de pivotement du tronçon rabattant (3).
